# EUROPEAN PATENT APPLICATION

(11) **EP 4 050 549 A1**
(43) Date of publication of application: **31.08.2022**
(21) Application number: 20878282.1
(22) Date of filing: 19.10.2020
(51) Int. Cl.: G06Q 40/02, H04L 29/06

(54) **FINANCIAL TRANSACTION SYSTEM AND METHOD THEREOF**

(30) Priority: 21.10.2019 KR 20190130387
(71) Applicant: Yoon, Seong Min, Guri-si, Gyeonggi-do 11952 (KR)
(72) Inventor: Yoon, Seong Min, Guri-si, Gyeonggi-do 11952 (KR)
(74) Representative: Cabinet Chaillot
(86) International application number: PCT/KR2020/014216
(87) International publication number: WO 2021/080261

(57) **Abstract**

A system for financial transaction comprising: a financial transaction management computer that executes and manages the financial transaction of financial trader, and a identity authentication system that executes identity authentication of the financial trader based on identity verification information of the financial trader provided from the related persons of the financial trader, the financial transaction management computer including computer hardware that causes the system performs: extracting information of unrelated persons not related to a financial trader according to a financial transaction request of the financial trader who is completed the identity authentication in the identity authentication system; requesting a financial transaction approval of the financial trader by providing financial transaction details of the financial trader to the unrelated persons; and receiving an approval information of the financial transaction of the financial trader from the unrelated persons, and completing the financial transaction of the financial trader.

## Description

### BACKGROUND OF THE INVENTION

### Field of the Invention

The present invention relates to a financial transaction system and method thereof. More particularly, the present invention relates to a financial transaction system and method capable of preventing illegal use of identity authentication, security of financial transactions, and rapid transaction execution, in which the identity verification of those who perform financial transactions such as money transfers is performed by verifying the identity of the related persons, and when those who have been authenticated through identity verification request a financial transaction, it is characterized in that the transaction of the financial transaction requester is approved based on transaction approval information provided by a plurality of unrelated persons not related to the financial transaction requestor.

### Description of the Related Art

Recently, financial transactions through decentralization have been attempted through the sharing of transaction ledgers by block chain, but they have not been commercialized due to limitations in their use in actual transactions. The reason is that, in order to add new blocks in the block chain, cryptographic verification procedures of all blocks are required, so it is not suitable for business fields that require fast transactions. In order for the transaction ledger sharing method by the block chain to be commercialized, a constant speed must be ensured by flexibly responding to an increase in the number of users. However, the above method has limitations in terms of scalability because the speed is lowered compared to the existing system of the central processing method and the block insertion is serialized, which is slower than the traditional database that updates in parallel (expensive cost and slow speed). Finally, the block chain relies on encryption technology, and for this purpose, the algorithm SHA-256 hash cipher is used, but according to the results of several studies, there is a concern that these algorithms will ultimately be broken due to quantum computing.

In relation to transactions using block chain, the invention of a system for trading user-defined currency based on block chain and operating method thereof of Republic of Korea Patent Publication No. 10-2018-0113143 (published on October 15, 2018) is disclosed.

The published invention has the following characteristics. A system for trading user-defined currency based on a block chain to securely trade user-defined currency is provided. According to an embodiment of the present invention, the system for trading user-defined currency based on a block chain comprises a plurality of block chain nodes which constitute a peer-to-peer (P2P) based block chain network, distribute and manage block chain data in which a plurality of blocks are linked in a chain form, and records transaction data for user-defined currency defined based on the virtual currency using the block chain date, and a service providing server which provides a transaction service for the user-defined currency in cooperation with the block chain network. It is possible to provide a secure transaction service for the user-defined currency.

In addition, the invention of a method for processing block chain-based real-time transaction and system thereof of Republic of Korea Patent Publication No. 10-2018-0113145 (published: October 15, 2018) is disclosed.

The published invention has the following characteristics. A method of processing a block chain-based real time transaction performed by a block chain-based transaction processing system including a plurality of block chain nodes constituting a block chain network and a service providing server, comprises the steps of: performing, by the service providing server, a first process for delivering a processing request for a target transaction to a first block chain node among the plurality of block chain nodes in response to receiving the processing request for the target transaction from a payor's terminal and obtaining an inspection result of validation of the target transaction from the first block chain node; performing, by the service providing server, a second process of transferring an electronic money from an electronic wallet of the payor to an electronic wallet of a payee depending upon the target transaction if the target transaction is valid; and performing a third process of writing data for the target transaction to a new block and propagating the new block onto the block chain network by a second block chain node among the plurality of block chain nodes, wherein the second process and the third process may be processed in parallel.

Therefore, an invention of a financial transaction system and method thereof having following characteristics is desired. There is no error in the approval of the identity authentication of the transaction party by verifying the identity of the parties involved in the transaction. The financial transaction of the transaction party is approved through the transaction approval of unrelated persons who are not related to the transaction party. Due to this, it is characterized in that financial transactions can be performed quickly in parallel.

### SUMMARY OF THE INVENTION

The present invention is to solve the problems of the conventional self-authentication means. It is an object of the present invention to make a financial transaction quick and easy without performing repeated actions every time authentication is performed by performing the identity authentication of the transaction party based on the identification of related persons, in the financial transaction of the transaction parties whose identity authentication is approved, the transaction is approved based on the transaction approval of unrelated persons not related to the transaction party, and the transaction result is stored in the terminal of the transaction party, the terminal of the unrelated party and the financial transaction management computer. An object of the present invention is to provide a financial transaction system and method for distributed storage.

### [Technical Solution]

As a technical solution for achieving the object of the present invention, a first aspect of the present invention provides a financial transaction system including: a financial transaction management computer for managing identification information including personal information of financial traders, user terminal information, and account information of financial traders, etc., a financial transaction information storage computer communicatively connected to the financial transaction management computer or included in the financial transaction management computer and storing data necessary for the financial transaction management of the financial transaction management computer, an artificial intelligence computer that is connected to communication with the financial transaction management computer and provides resources necessary for approval of the financial transaction of the financial trader, at least one financial institution computer that is communicatively connected to the financial transaction management computer and performs a financial transaction approved for the financial trader, an identity authentication system for approving the identity authentication of the financial trader based on identity confirmation information of at least one related person of the financial trader, a financial trader terminal used by the financial trader to perform a financial transaction by receiving a financial transaction approval from the financial transaction management computer after performing identity authentication through the identity authentication system, and an unrelated person terminal used by unrelated persons unrelated to the financial trader that provides financial transaction approval information of the financial trader in response to the request of the financial transaction management computer, wherein the resource provided by the artificial intelligence computer to the financial transaction management computer is information of unrelated persons who are not related to the financial transaction among members of the identity authentication system, wherein a financial transaction terminal used by a financial trader whose identity authentication has been approved through the identity authentication system performs a financial transaction with the counterparty, wherein after the financial transaction management computer receives the financial transaction information of the financial trader and confirms the intention of the financial transaction with the financial transaction terminal, requesting financial transaction approval information by providing the transaction information of the financial trader to the terminals of the unrelated persons of the financial trader selected by the artificial intelligence computer or the selected unrelated persons not related to the financial trader, and receiving approval information for the financial transaction of the financial transaction from the unrelated terminal and approve the transaction of the financial transaction.

A second aspect of the present invention provides a financial transaction system including: an identity authentication system that executes user authentication of a financial trader, a financial transaction management computer that manages a financial transaction approval and financial transaction of the financial trader, and an artificial intelligence computer that provides information on an unrelated group consisting of a plurality of unrelated persons not related to the financial transaction among the members stored in the identity authentication system to the financial transaction management computer, wherein the identity authentication system is provided with personal information of the financial trader and identity verification data verifying that the financial trader is the same person as the person known by the related persons from a related person group comprising at least one related person of the financial trader, approves the user authentication of the financial trader based on the consistency between the identity verification data and related data held by itself, and provides the approved identity authentication information to the financial transaction management computer, wherein when the financial trader who has received approval for the user authentication in the identity authentication system inputs information of the financial transaction into a financial transaction terminal, the financial transaction management computer receives the information of the financial transaction and confirms an approval intention of the financial transaction of the financial trader with the financial transaction terminal, receives an approval data for the financial transaction of the financial trader transmitted by the unrelated person group of the financial trader provided by the artificial intelligence computer and performs an approval for the financial transaction of the financial trader, wherein the financial transaction management computer accumulates a predetermined profit to information of the unrelated group, wherein the financial transaction management computer distributes and stores completed financial transaction information in the financial transaction terminal, the counterpart financial transaction terminal of the financial transaction, a set number of unrelated person terminals among the unrelated person group, and the financial transaction management computer.

A third aspect of the present invention provides a financial transaction method using a system including an identity authentication system that performs user authentication of a financial trader; a financial transaction management computer that approves and manages financial transactions of financial traders; and an artificial intelligence computer that provides an unrelated group consisting of a plurality of unrelated persons not related to the financial transaction among the members stored in the identity authentication system to the financial transaction management computer, comprising: providing, by a financial trader terminal used by a financial trader, a personal information of the financial trader and information of at least one related person related to the financial trader for performing user authentication of the financial trader to the identity authentication system, and requesting an approval for the user authentication of the financial trader; providing, by the identity verification system, information of the financial trader to related person terminals of the related persons, and requesting an identity verification as to whether the financial trader is the person; verifying, by the identity authentication system, an identity of the financial trader based on consistency between an identity verification data of the financial trader received from the related person terminals of the related persons and analysis data it owns, and transmitting an approval information for the user authentication of the financial trader to the financial trader terminal; receiving, by the financial trader terminal, financial transaction information with a financial transaction counterparty input by the financial trader; receiving, by the financial transaction management computer connected to the financial transaction terminal, the financial transaction information of the financial trader, and confirming the intention of the financial transaction with the financial trader terminal; extracting, by the artificial intelligence computer, information of unrelated persons not related to the financial trader stored in the identity authentication system and transmitting the information of extracted unrelated persons to the financial transaction management computer; transmitting, by the financial transaction management computer, the financial transaction information of the financial trader to the unrelated person terminals of the unrelated persons based on the information of the unrelated persons, and requesting whether to approve the financial transaction of the financial trader; receiving, by the financial transaction management computer, information on approval of the financial transaction of the financial trader from the plurality of unrelated person terminals; transmitting, by the financial transaction management computer, financial transaction completion information based on confirmation information of the intention of the financial transaction of the financial trader and the approval information of the financial transaction of the unrelated persons to the financial trader terminal; generating and storing, by the financial transaction management computer, a transaction ledger related to the financial transaction information, and distributing and storing the transaction ledger in the financial trader terminal, terminal of the counterparty of the financial transaction, and a plurality of unrelated person terminals of the unrelated persons who provide the approval information of the financial transaction.

### ADVANTAGEOUS EFFECTS

According to the present invention, identification of a financial trader is based on the verification of personal information of the financial trader, and at the same time, by approving on the basis of consistency with identity verification data for a financial trader received from a number of related persons related to the financial trader and identity authentication related data held by the system itself, it is possible to prevent error of user authentication and unauthorized use of user authentication of hacking of information related to user authentication, etc.

In addition, based on the identity verification data of the financial trader updated in the system, when the financial trader requests approval of user authentication again, the user authentication of the financial trader can be performed quickly and conveniently by using the updated identity verification data of the financial trader.

In addition, when a financial trader who has been approved for identity authentication in the identity authentication system executes a financial transaction, the financial transaction management computer can execute the financial transaction based on the approval information of the identity authentication system without going through a separate user authentication procedure.

In addition, based on the information of a number of unrelated persons (self-selected or provided by an artificial intelligence computer) unrelated to the financial trader, receiving approval information for the financial transaction of unrelated persons regarding the financial transaction of the financial trader, and completing execution of the financial transaction of the financial trader based on the approval information for the financial transaction,

In addition, by generating a transaction ledger related to completed financial transaction, and distributing and storing the transaction ledger in the financial trader terminal, terminal of counterparty of the financial transaction of the financial trader, and a number of unrelated person terminals which provided the approval information of the financial transaction, it can prevent errors and fraudulent use of the user authentication by financial traders and provide speed and convenience of the user authentication.

In addition, by approving the financial transaction based on the approval information of a number of unrelated persons of the financial transaction, it is possible to prevent errors or fraudulent financial transactions.

In addition, reliability between financial transaction parties can be secured by distributing and storing the generated transaction ledger related to completed financial transaction information in related computers or terminals, respectively.

In this case, the transaction ledger may not be stored on all unrelated person terminals, but only on predetermined number of unrelated person terminals participating in the approval of the financial transactions.

Therefore, according to the present invention, decentralized financial transactions can be realized, and there is an effect that no additional costs are required for rapid financial transactions, real-name transactions, protection of personal information of the financial trader, and financial transactions and system maintenance.

### BRIEF DESCRIPTION OF THE DRAWINGS

FIG. 1 is a schematic configuration diagram of an embodiment of a financial transaction system of the present invention.
FIG. 2 is a schematic configuration diagram of an embodiment of a financial transaction management computer which is a main part of the financial transaction system of the present invention.
FIG. 3 is a schematic configuration diagram of an embodiment of a financial transaction information storage computer which is a main part of the financial transaction system of the present invention.
FIG. 4 is a schematic configuration diagram of an embodiment of a financial trader terminal which is a main part of the financial transaction system of the present invention.
FIG. 5 is a schematic configuration diagram of an embodiment of an unrelated person terminal which is a main part of the financial transaction system of the present invention.
FIG. 6 is a schematic configuration diagram of an embodiment of an identity authentication system which is a main part of the financial transaction system of the present invention.
FIG. 7 is a schematic configuration diagram of an embodiment of an operating computer which is a main part of the identity authentication system of the present invention.
FIG. 8 is a schematic configuration diagram of an authentication request management module which is a main part of the operating computer of the present invention.
FIG. 9 is a schematic configuration diagram of an embodiment of an authentication information management module which is a main part of the operating computer of the present invention.
FIG. 10 is a schematic configuration diagram of an embodiment of an artificial intelligence computer which is a main part of the identity authentication system of the present invention.
FIG. 11 is a schematic configuration diagram of an embodiment of an identity verification execution management module which is a main part of the artificial intelligence computer of the present invention.
FIG. 12 is a schematic configuration diagram of an embodiment of a data storage computer which is a main part of the artificial intelligence computer of the present invention.
FIG. 13 is a schematic configuration diagram of an embodiment of an analysis data storage computer which is a main part of the artificial intelligence computer of the present invention.

### BEST MODE FOR THE PREFERRED EMBODIMENT

A system for financial transaction comprising: a financial transaction management computer for performing and managing financial transactions of financial traders, including: means for receiving and managing information of unrelated persons not related to the financial trader according to the financial transaction request of the financial transaction; means for requesting approval of the financial transaction of the financial trader by providing the financial transaction details of the financial trader to the unrelated persons; and means for receiving approval information of the financial transaction of the financial trader from the unrelated persons and completing the financial transaction of the financial trader.

### DETAILED DESCRIPTION OF THE PREFERRED EMBODIMENT

Hereinafter, embodiments of the present invention will be described in detail with reference to the accompanying drawings.

In order to help the understanding of the present invention, terms used in the description of the embodiments of the present invention will be defined.Various computers and terminals used in the present invention may have a hardware configuration, or a computer program, a web program, or a cloud computing program utilizing the hardware resources. For example, the financial transaction management computer, artificial intelligence computer, and operating computer of the present invention may consist of hardware included in each computer, and a computer program, web program or cloud computing executed by utilizing the hardware resources of each computer. In addition, acquaintances, neighbors, relatives, friends, co-workers, schools, classmates, traders, etc. used in the embodiment of the present invention may be collectively used as related persons, and each may be used for the same purpose as related persons. The artificial intelligence computer in the embodiments of the present invention may refer to an artificial intelligence computer included in the identity authentication system, and may be configured only for the financial transaction system of the present invention separately from the artificial intelligence computer included in the identity authentication system. In addition, the artificial intelligence computer is not limited to the term, and may be used in various terms for performing its function in an embodiment of the present invention. For example, even if it is referred to as an analysis computer, there is no shortage in describing the embodiments of the present invention. The above-described terms and enumeration of terms are merely examples, and may include various terms and elements not listed, and the like, predictable by those skilled in the art.

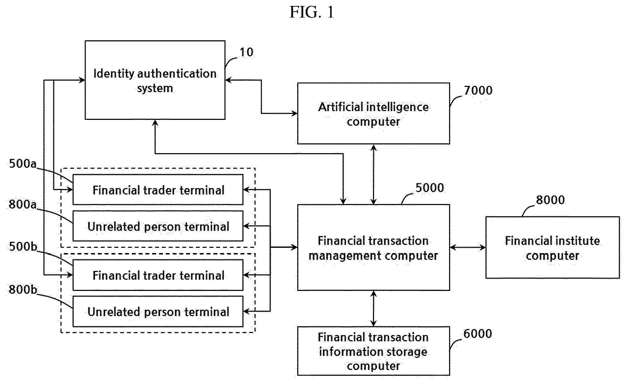

FIG. 1 is a schematic configuration diagram of an embodiment of a financial transaction system of the present invention.

As illustrated in FIG. 1, a system for financial transaction of the present invention including: a financial transaction management computer 5000 that manages identification information including personal information of a financial trader, user terminal information and account information of a financial trader, manages unrelated group information including a plurality of unrelated person information not related to the financial trader, and manages an execution of financial transaction between the financial traders by receiving the approval information of the unrelated person group according to request for the financial transaction of the financial trader; a financial transaction information storage computer 6000 communicatively connected to the financial transaction management computer 5000 or included in the financial transaction management computer 5000 that stores data necessary for the financial transaction management of the financial transaction management computer 5000; an artificial intelligence computer 7000 communicatively connected to the financial transaction management computer 5000 that provides resources necessary for approval of the financial transaction of the financial trader; a financial institution computer 8000 communicatively connected to the financial transaction management computer 5000 that includes at least one bank computer for performing a financial transaction approved for the financial trader; an identity authentication system for approving the identity authentication of the financial trader based on identity confirmation information of at least one related person of the financial trader; an identity authentication system 10 that approves user authentication of the financial trader based on information of identity verification of at least one related person of the financial trader; a financial trader terminal 500a and 500b used by the financial trader to obtain an approval of user authentication form the identity authentication system 10, which executes financial transaction by accessing the financial transaction management computer 5000, and receives an approval of the financial transaction from the financial transaction management computer 5000; and a plurality of unrelated terminals 800a and 800b used by a plurality of unrelated persons unrelated to the financial trader, which provide the approval information of the financial transaction of the financial trader in response to the request of the financial transaction management computer 5000.

In the embodiment of the present invention, the resource provided by the artificial intelligence computer 7000 to the financial transaction management computer 5000 is information of unrelated persons who are not related to the financial trader among members of the identity authentication system 10. A financial transaction with the counterparty of the financial transaction may be performed in the financial trader terminals 500a and 500b used by the financial trader whose user authentication is approved through the identity authentication system 10. The financial transaction management computer 5000 may receive the financial transaction information of the financial trader and confirm the intention of the financial transaction with the financial transaction terminals 500a and 500b. The financial transaction management computer 5000 may provide the transaction information of the financial trader to the unrelated terminals 800a and 800b of a plurality of selected unrelated persons not related to the financial trader or a plurality of unrelated persons of the financial trader selected by the artificial intelligence computer 7000. The financial transaction management computer 5000 can complete the financial transaction of the financial trader. The financial transaction management computer 5000 may be configured to receive information on whether or not to approve the financial transaction of the financial trader from the plurality of unrelated persons to complete the financial transaction of the financial trader. The financial transaction management computer 5000 may include at least one server computer having a communication means and capable of executing a computer program or a web program. The financial transaction information storage computer 6000 may be configured as a database management system (DBMS). The artificial intelligence computer 7000 may include at least one server computer having a communication means and capable of executing an artificial intelligence (AI)-related computer program or web program. The financial institution computer 8000 may be configured as a server computer installed in banks that are affiliated with the financial transaction system of the present invention among various banks that perform on/offline financial transactions in the market and are communicatively connected to the financial transaction management computer. For the configuration of the identity authentication system 10, reference may be made to the description of an embodiment of the identity authentication system to be described later. The financial transaction terminals 500a and 500b and the unrelated terminals 800a and 800b are provided with communication means, and may be composed of a terminal, such as a smart phone, tablet computer, personal computer (PC), notebook in which an application program or web program can be executed.

The application program or web program provided by the financial trader terminals 500a and 500b includes a user authentication approval requesting means for requesting an approval of the user authentication to the identity authentication system 10 and a financial transaction executing means for performing the financial transaction and receiving the approval of the financial transaction. The application program or web program provided by the unrelated person terminals 800a and 800b may be composed of a financial transaction approval information providing means that provides the approval information of the financial transaction of the financial trader to the financial transaction management computer 5000 and can verify profit information provided by the financial transaction management computer 5000.

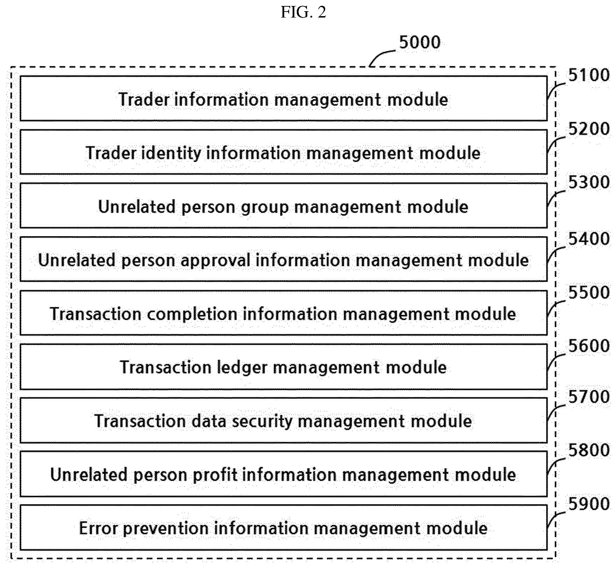

FIG. 2 is a schematic configuration diagram of an embodiment of a financial transaction management computer which is a main part of the financial transaction system of the present invention.

As illustrated in FIG. 2, the financial transaction management computer 5000 of the present invention including: a trader information management module 5100 that manages personal information of a financial trader who is registered as a financial transaction member in the financial transaction management computer 5000 or as a member in the identity authentication system 10 and information of the financial trader terminals 500a and 500b used by the financial trader; a trader identification information management module 5200 that provide and manages unique identification information to the financial trader for the financial transactions; an unrelated person group management module 5300 that manages information of a plurality of unrelated person group which is not related to the financial trader extracted from among the members stored in the identity verification system 10, and information of unrelated person group including terminal information used by unrelated persons; an unrelated person group management module 5300 that manages information of a plural of unrelated person group of the financial trader which is not related to the financial trader extracted from the member information stored in the identity authentication system 10, or information of unrelated person group including user terminal information extracted and provided according to a set rule or randomly among the unrelated persons not related to the financial transaction; an unrelated person approval information management module 5400 that manages an approval information of the financial transaction provided from the unrelated person terminals 800a and 800b receiving information of the financial trader and the financial transactions from the unrelated person group management module 5300; a transaction completion information management module 5500 that receives the information of the financial transaction transmitted from the financial trader terminals 500a and 500b, confirms an intention of the financial transaction to the financial trader, and completes the financial transaction of the financial trader based on the approval information of the financial transaction of the unrelated persons; a transaction ledger management module 5600 that generates and stores a transaction ledger of the financial trader based on completed financial transaction information of the financial trader managed by the transaction completion information management module 5500, and separates and stores generated transaction ledger to the financial trader terminals 500a and 500b, the counterpart's financial trader terminals 500a and 500b, and the unrelated person terminals 800a and 800b which provided the approval information of the financial transaction; a transaction data security management module 5700 that assigns an identification number to a financial trader's financial account to prevent hacking and illegal use, and encrypts and manages personal information of the financial trader, account information of the financial trader, and financial transaction information; an unrelated person profit information management module 5800 that provides profits such as predetermined points to unrelated persons who have provided approval information regarding the financial transaction of the financial trader and manages the information; and an error prevention information management module 5900 that corrects errors in deposit amounts that may occur in financial transaction, determines whether or not to correct errors and criteria by using the collective intelligence convergence system with respect to operational errors, bugs, or strong artificial intelligence of the artificial intelligence computer 7000, and manages the information.

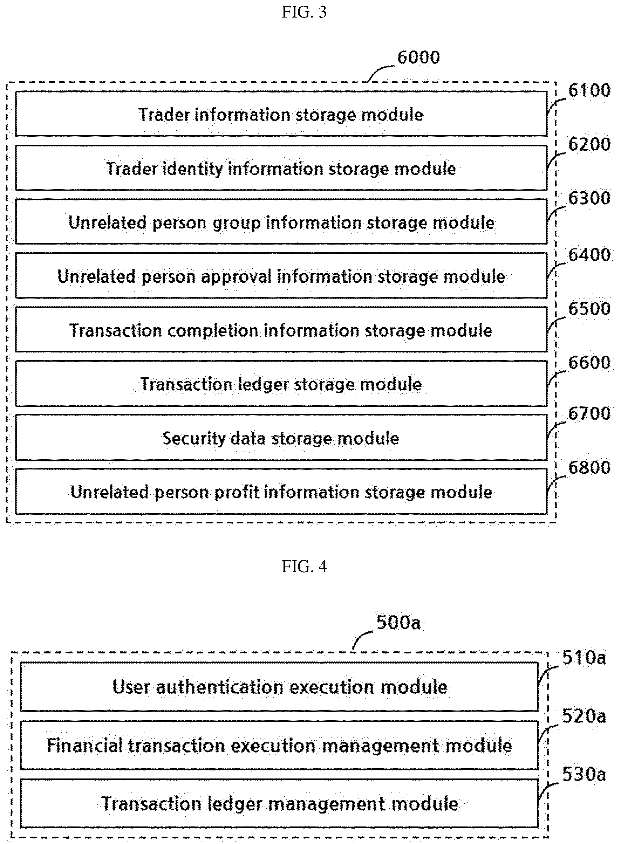

FIG. 3 is a schematic configuration diagram of an embodiment of a financial transaction information storage computer which is a main part of the financial transaction system of the present invention.

As illustrated in FIG. 3, the financial transaction information storage computer 6000 comprising: a trader information storage module 6110 that stores financial trader information managed by the trader information management module 5100 of the financial transaction management computer 5000; a trader identification information storage module 6200 that stores financial trader identification information including account information given to the financial traders managed by the trader identification information management module 5200; an unrelated person group information storage module 6300 that stores information of the unrelated persons not related to the financial trader managed by the unrelated persons group management module 5300; an unrelated person approval information storage module 6400 that stores the approval information of the financial transactions of the unrelated persons managed by the unrelated person approval information management module 5400; a transaction completion information storage module 6500 that stores completed financial transaction information of the financial traders managed by the transaction completion information management module 5500; a transaction ledger storage module 6600 that stores the transaction ledger related to the financial transaction information of the financial trader generated by the transaction ledger management module 5600; a security data storage module 6700 that stores encrypted data of financial transaction information and financial transaction information managed by the transaction data security management module 5700; and an unrelated profit information storage module 6800 that accumulates and stores the profit information given to the unrelated person by the unrelated person profit information management module 5800.

FIG. 4 is a schematic configuration diagram of an embodiment of a financial trader terminal which is a main part of the financial transaction system of the present invention.

Herein, the configuration of the financial trader terminal 500a will be mainly described. As illustrated FIG. 4, financial trader terminal 500a and 500b of the present invention, comprising: a user authentication execution module 510a that receives a password, personal information and related person of the financial trader to obtain approval of user authentication for a financial transaction, and transmitting the received information to the identity authentication system 10; a financial transaction execution management module 520a that receives the transaction amount and transaction type or counterparty information provided by the financial trader to perform a financial transaction through the financial transaction management computer 5000; a transaction ledger management module 530a that receives and manages the transaction ledger transmitted from the financial transaction management computer 5000 after the financial transaction is completed.

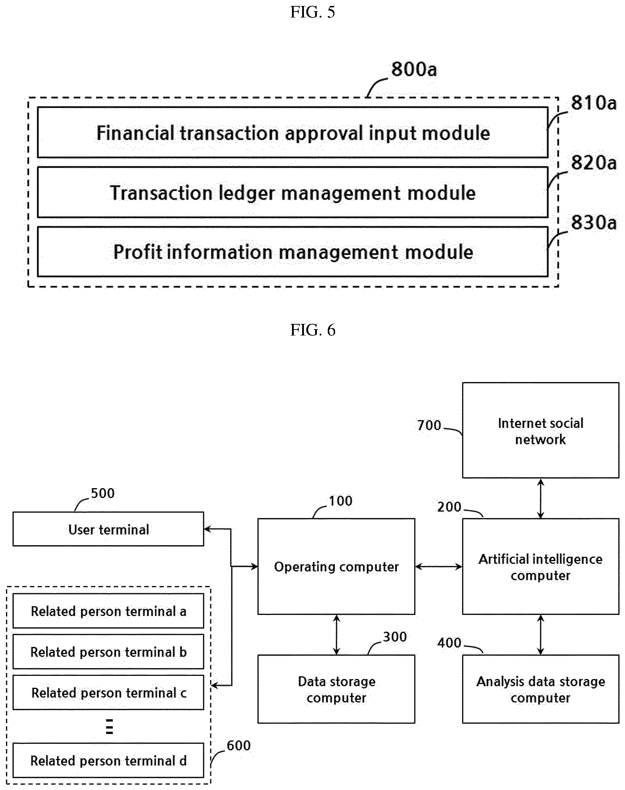

FIG. 5 is a schematic configuration diagram of an embodiment of an unrelated person terminal which is a main part of the financial transaction system of the present invention.

Herein, the configuration of the unrelated person terminal 800a will be mainly described. As illustrated in FIG. 5, the unrelated person terminal 800a of the present invention comprising: a financial transaction approval input module 810a that inputs data on whether or not to approve a financial transaction of a financial trader in response to a request for replying whether or not to approve the financial transaction of the financial trader transmitted from the financial transaction management computer 5000; a transaction ledger management module 820a that manages a transaction ledger generated by the financial transaction management computer 5000 which completes the financial transaction of the financial trader based on the financial transaction approval data provided from the unrelated terminal 800a; a profit information management module 830a that manages profit information, such as points, provided by the financial transaction management computer 5000 in return for providing the approval data of the financial transaction of the financial trader.

Hereinafter, the operation of the embodiment of the financial transaction system of the present invention will be described in detail with reference to FIGS. 1 to 5 .

A financial trader accesses the identity authentication system 10 with the financial trader terminal 500a and transmits user authentication request data including personal information, password, and a number of related person information such as acquaintances of the financial trader to the user authentication execution module 510a to approve the user authentication. The identity authentication system 10 receives the user authentication request data of the financial trader and transmits the identity verification request of the financial trader to the related person terminal of a plurality of related person by using the included information in the user authentication request data. The identity verification system 10 receives the identity verification data of the financial trader from the plurality of related person terminal, checks the identity based on the consistency of the identity verification data and data it owns, and then sends an approval data of the user authentication of the financial trader to the financial trader terminal 500a. In addition, when the financial trader terminal 500a accesses the financial transaction management computer 5000 and requests a user authentication approval to perform a financial transaction, the financial transaction management computer 5000 may be configured to transmit the user authentication approval request data of the financial trader to the identity authentication system 10 to perform user authentication of the financial trader. The financial transaction management computer 5000 stores unique identification information set by the financial trader in the financial transaction terminal 500a and approved by the financial transaction management computer 5000 to the financial transaction information storage computer 6000. The unique identification information of the financial trader consists of account information for financial transactions. The unique identification information of the financial trader, for example, account information, may be composed of a combination of a country code composed of alphabets or numbers, a set number of area codes, and a unique number set by the financial trader within a set number of numbers. In addition, when the financial trader needs to open several accounts, one or more account information may be opened by combining an additional number with the combination account information.

The set unique identification information of financial traders can be encrypted and managed. Table 1 below shows an example of the structure of unique identification information and account information of a financial trader.

**[Table 1]**

| | **Country Code** | **Local Code** | **Unique Number** | **Addition Number** | **Unique Identity Code(Account Information)** |
|---|---|---|---|---|---|
| **Guidance** | Alphabet or Numeric | 3 digits | Number set from 12-20 digits | Random number | Set unique identity information |
| **Identity Code** | KR or KOR | 042 | 123456789012345 | | KR042123456789012345 |
| **Addition** | | | | 5 | KR042123456789012345-5 |
| **Addition** | | | | 9 | KR042123456789012345-9 |

As shown in the table above, it is checked whether the unique identification information (eg, KR042123456789012345) set by the financial trader in the financial transaction terminal 500a is overlapped with the unique identification information stored in the financial transaction management computer 5000. If the check result does not overlap, the unique identification information of the financial trader is approved and stored.

The financial trader whose user authentication is approved inputs financial transaction details into the financial transaction execution module 520a of the financial trader terminal 500a to perform a financial transaction.

The financial transaction management computer 5000 receives the financial transaction details input to the financial transaction terminal, and transmits financial transaction intention confirmation data to the financial trader terminal 500a to confirm the financial transaction intention of the financial trader. In this case, the financial transaction management computer 5000 may inquire the balance information from the account information of the financial trader stored in the financial transaction information storage computer 6000.

The artificial intelligence computer 7000 connected to the financial transaction management computer 5000 selects a set rule or randomly information of a plurality of unrelated person including information of unrelated person terminals from member information who is not related with the financial trader among member information stored by the identity authentication system 10, and provides the information of a plurality of unrelated person to the financial transaction management computer 5000.

The financial transaction management computer 5000 requests confirmation of the financial transaction details of the financial traders to the unrelated terminals 800a of the unrelated persons, and completes the financial transaction of the financial trader based on the transaction details approval information provided from a plurality of unrelated terminals 800a.

The financial transaction management computer 5000 generates a transaction ledger including completed financial transaction information of the financial trader and stores the transaction ledger in the financial transaction information storage computer 6000 in connection with information of the financial trader, and stores the transaction ledger in the financial transaction information storage computer 6000. The transaction ledger is distributed and stored in the financial trader terminal 500a and a plurality of unrelated person terminals 800a that have provided the approval information of the financial transaction.

In addition, the financial transaction management computer 5000 stores a predetermined profit such as points in connection with information of unrelated persons who are users of a plurality of unrelated terminals 800a that have provided financial transaction approval information to the financial transaction information storage computer 6000.

The above embodiment of the present invention is not limited to the above-described components of the present invention.

In an embodiment of the financial transaction system of the present invention, input of financial transaction details between parties to a financial transaction and a program for calculating and verifying financial transaction details may be provided using cloud computing system resources.

In addition, a virtual web space of the cloud computing system that can store and check the transaction ledger for completed financial transaction information is provided to the financial trader and a plurality of unrelated persons. The financial transaction management computer 5000 may distribute and store the transaction ledger in each virtual web space of the cloud computing system.

As the financial transaction system of the present invention utilizes the cloud computing system, the financial traders and unrelated persons can use the financial transaction system of the present invention 24 hours a day, 365 days a year, regardless of whether other users have access to the financial transaction system of the present invention.

In the financial transaction system of the present invention, when a cloud computing system is introduced, when a financial trader accesses the financial transaction system of the present invention, , it is possible to secure safety by automatically checking whether or not virus infection or hacking in a program(for example, calculation function application program) for inputting financial transaction details, transaction details calculation and confirmation provided by the cloud computing system.

When the cloud computing system is introduced in the financial transaction system of the present invention, the approval of financial transactions of financial traders by unrelated persons is automatically performed by the calculation program provided by the cloud computing system. Therefore, it is not necessary for the unrelated persons to individually calculate the transaction details to approve the financial transaction.

Of course, when the cloud computing system is not used in the financial transaction system of the present invention, the artificial intelligence computer 7000 may be configured to automatically calculate transaction details for approval of financial transactions of unrelated persons. Also, there is no need for the unrelated persons to calculate transaction details individually to approve the financial transaction.

Regarding the benefits provided to non-related persons who provide financial transaction approval information in the embodiment of the financial transaction system of the present invention, when the unrelated person profit information management module 5800 of the financial transaction management computer 5000 provides predetermined points(for example, 1 point per an approval of financial transaction) as a reward for the approval of the financial transaction by the unrelated persons and storing the generated transaction ledger, and stores the points to the unrelated person profit information storage module 6800.

Considering that unrelated persons for financial transaction approval are randomly selected by the artificial intelligence computer 7000, there is an effect of providing predetermined points to all members using the financial transaction system of the present invention. The points can be set to be usable like cash in the financial transaction system of the present invention.

As described above, in the embodiment of the financial transaction system of the present invention, when information on financial transaction details by a financial trader (such as calculation details between parties to a financial transaction) and financial transaction approval information by the unrelated persons are received in the financial transaction management computer 5000, the financial transaction management computer 5000 checks the transaction ledger including a calculation details of the financial transaction parties and the financial transaction approval details of unrelated persons.

In addition, in the transaction completion information management module 5500 of the financial transaction management computer 500 or the artificial intelligence computer 7000 finally checks whether the financial transaction details calculated by itself and the transaction ledger match, and if they match, the financial transaction is finally approved.

A transaction ledger of completed financial transaction details is created and distributed and stored in each block (financial trader terminal, unrelated terminals and financial transaction management computer).

Hereinafter, reasons for involving the unrelated persons in the financial transaction system of the present invention for approval of financial transactions by financial traders and the meaning of unrelated persons' approval of financial transactions will be described.

Financial transactions in the embodiment of the financial transaction system of the present invention are made based on information (balance, etc.) in unique identification information (account information) provided to each financial trader.

When the financial transaction system of the present invention is first started, the account information of a specific financial trader will start from 0 (zero), and in the case of partnership with an existing bank, etc., the transaction may be performed while a certain balance is filled.

A financial transaction is nothing more than a record of how much money is exchanged with whom. Therefore, it can be proceeded with a simple calculation in approving the financial transaction.

Therefore, as long as there is a terminal equipped with an application or program that performs arithmetic operations, anyone can calculate and approve transaction details from anywhere.

However, if the simple calculation is entrusted to a specific person, it will be forged, so the reliability of the financial transaction details can be secured by sharing the financial transaction details with the financial transaction management computer and unrelated persons of the financial transaction to prevent forgery.

This is because unrelated persons have no incentive to increase or decrease financial information of unknown people. Therefore, approval of financial transactions by unrelated persons can ensure the reliability.

And, since the financial transaction system of the present invention can be configured to be automatically calculated and approved by a calculator application program instead of manually calculating and approving financial transactions by unrelated persons when approval of financial transactions by unrelated persons. Therefore, it is possible to minimize the burden on unrelated persons in approving financial transactions.

Therefore, with respect to approval of financial transactions by unrelated persons, the financial transaction system of the present invention executes financial transactions based on balance information of unique identification information (account information) of the financial traders, and the transaction details of the financial transaction is approved by the unrelated persons.

The financial transaction approval may be configured to be automatically performed by a calculator application program existing in a terminal of randomly selected unrelated persons or a cloud virtual space.

The calculator application program is configured to approve the financial transaction by determining whether the results calculated in each calculator application program match because all of the calculator application programs exist in the terminal of the financial transaction party, the financial transaction management computer (or artificial intelligence computer), and the unrelated person terminal.

As long as the calculator application programs on all terminals do not malfunction at the same time, there is no possibility of errors in the financial transaction calculation values.

Hereinafter, an example of a financial transaction using the financial transaction system of the present invention will be described in more detail.

Among the members stored as members in the identity authentication system 10 of the present invention (or among those who sign up for membership), a party making a financial transaction (fund transfer) using the financial transaction system of the present invention is exemplified as follows.

Assuming that the sender is financial trader a, related persons such as acquaintances of financial trader a are b to m, unrelated persons are n to z, and the payee is financial trader A, the financial trader a provides information of the related person b to m including related person terminals using financial trader terminal to the identity authentication system 10, receives an approval of user authentication by the identity authentication system 10, and inputs the financial transaction details to transfer 100 to the financial trader A.

The financial transaction management computer 5000 confirms that the balance in the unique identification information (account information) of the financial trader a is 100 or more. Subsequently, a confirmation message is received by requesting confirmation as to whether it is appropriate to transfer 100 to the financial trader A by the financial trader terminal 500a of the financial trader a.

The financial transaction management computer 5000 requests the artificial intelligence computer 5000 for information on unrelated persons of the financial trader a, which is necessary for approval of the financial transaction.

The artificial intelligence computer 7000 extracts information of unrelated persons including information of the unrelated person terminals of unrelated persons n to z who is not related with financial trader a among members stored in the identity authentication system 10, and provides the information of the unrelated persons to the financial transaction management computer 5000.

The financial transaction management computer 5000 transmits the details of the transfer (withdrawal) of funds of the financial trader a to the unrelated person terminals 800a of the unrelated persons n to z provided by the artificial intelligence computer 7000, requests financial transaction details (withdrawal amount) of the financial trader a, receives an approval information of the financial transaction details from the unrelated person terminals 800a of the unrelated persons, decreases 100 to the account information of the financial trader a, and completes the financial transaction by increasing 100 to the account information of the financial trader A.

The financial transaction management computer 5000 generates a transaction ledger based on financial transaction details information including 100 decrease and increase history information in the account information of the financial trader a and the financial trader A and the balance information of each account information.

The transaction ledger is distributed and stored and shared in the financial trader terminal 500a of financial trader a, the financial trader terminal 500b of financial transaction A, the unrelated person terminals 800a of unrelated persons of financial trader a participating in the approval of financial transaction details, and the financial transaction management computer 5000.

The transaction ledger is not shared by all unrelated persons of the financial trader, but is shared by unrelated persons participating in approval of financial transaction details among unrelated persons.

The number of unrelated persons participating in financial transaction approval may be set in the financial transaction management computer 5000, or may be randomly selected by the artificial intelligence computer setting the number. The number of unrelated persons to share the transaction ledger may increase or decrease according to the amount of financial transaction.

After the financial transaction by the financial transaction system of the present invention is stabilized, the number of unrelated persons to participate in financial transaction approval and the number of unrelated persons to share the transaction ledger among them can be automatically set in the artificial intelligence computer.

In this way, by limiting the number of blocks (unrelated terminals) to distribute and store the transaction ledger, it is possible to solve the problems of a decrease in transaction speed and high cost due to distributed storage in all existing nodes or blocks.

As an example of another financial transaction, even when financial trader B and financial trader C transfer funds to financial trader a, the financial transaction is performed through the above-described process.

When a predetermined ratio (eg, more than half) of unrelated persons who approve the financial transaction details agrees and the financial transaction management computer 5000 agrees to correct the transaction, it is possible to restore the wrong deposit details.

In order to extract information of unrelated persons from the artificial intelligence computer 7000 and provide it to the financial transaction management computer 5000, the artificial intelligence computer 7000 may refer to the information of the related persons provided by the financial trader a (or B, C) to the identity authentication system 10 to obtain an approval of user authentication, and may randomly select a set number of unrelated persons from among the remaining members except for the information of the related persons .

In addition, the artificial intelligence computer 7000 refers to the consistency of identity verification data related to related persons of members stored in the identity authentication system 10 and related data which is the relationship owned by the artificial intelligence computer 7000, and may randomly select a set number of unrelated persons from among the remaining members except for the information of the related persons of the financial trader a (or B, C).

The artificial intelligence computer 7000 of the financial transaction system of the present invention may be an artificial intelligence computer provided as one component of the identity authentication system 10, and may be a configuration independent of the artificial intelligence computer of the identity authentication system for extracting and providing unrelated person information.

Another example of a financial transaction using the financial transaction system of the present invention will be described in more detail.

The financial transaction will be described with the following example. For example, related persons of financial trader a are a majority including b to e, and unrelated persons are a large number including x, y, and z; related persons of financial trader n are a majority including f to i, and unrelated persons are a large number including s, t, u; and related persons of financial trader o are a majority including j to m, and unrelated persons are a large number including p, q, and r.

When the financial trader n transfers 50 to the financial trader a by using the financial transaction system of the present invention, the procedure for user authentication approval of the financial trader n is not different from the procedure of the identity verification of the majority including the related persons f to i.

The financial transaction management computer 5000 checks whether there is a balance of 50 or more in the unique identification information (account information) of the financial trader n, and confirms an intention of the financial transaction of the financial trader n to transfer 50 to the account of the financial trader a.

The financial transaction management computer 5000 calculates a result value of decreasing 50 in the account information of the financial trader n and increasing 50 in the account information of the financial trader a, receives the approval information of the financial transaction of the financial trader n from the majority including the unrelated persons s, t, u of the financial trader n provided by the artificial intelligence computer 7000, receives the approval information of the financial transaction of the financial trader a from the majority including the unrelated persons x, y, z of the financial trader a, and is completed the financial transaction related to the transfer of 50 to the financial trader a from the financial trader n.

The financial transaction management computer 5000 generates and stores transaction ledger based on transfer details related to the transfer of 50 to the financial trader a from the financial trader n and calculating values of a decrease of 50 in the account of the financial trader n and a increase of 50 in the account of the financial trader a.

The financial transaction management computer 5000 distributes and stores the transaction ledger in the financial trader terminal of the financial trader n, the financial trader terminal of the financial transaction a, the unrelated person terminals (a majority including s, t, u) of the financial trader n, and the unrelated person terminals (a majority including x, y, z) of the financial trader a.

In addition, in the above example, when the financial trader a transfers 30 to the financial trader o, the financial transaction management computer 5000 checks whether there is a balance of 30 or more in the unique identification information (account information) of the financial trader a and confirms an intention of the financial transaction of the financial trader a to transfer 30 to the account of the financial trader o.

In this case, the financial transaction management computer 5000 may verify the validity of the previous transaction related to the financial trader a.

The immediately preceding transaction of the financial trader a is a transaction in which 50 is transferred from the financial trader n. Therefore, if transaction details of the transaction ledgers distributed and stored in the unrelated person terminals of the unrelated persons participating the approval of the financial transaction, the financial trader terminals of the financial trader n and the financial trader a match, the financial transaction management computer 5000 may proceed with the financial transaction.

Even if some data in the transaction ledger is damaged or impossible to verify with respect to each holder storing the transaction ledger, if the number of holders of the transaction ledger that can be checked among the holders of the transaction ledger is greater than a certain percentage (eg 95%), it is considered valid and can proceed.

The financial transaction management computer 5000 calculates a result value of decreasing 30 in the account information of the financial trader a and increasing 50 in the account information of the financial trader o, receives the approval information of the financial transaction of the financial trader a from the majority including the unrelated persons x, y, z of the financial trader a provided by the artificial intelligence computer 7000, receives the approval information of the financial transaction of the financial trader o from the majority including the unrelated persons p, q, r of the financial trader o, and is completed the financial transaction related to the transfer of 30 to the financial trader o from the financial trader a.

The financial transaction management computer 5000 generates and stores transaction ledger based on transfer details related to the transfer of 30 to the financial trader o from the financial trader a and calculating values of a decrease of 30 in the account of the financial trader a and a increase of 30 in the account of the financial trader o, and distributes and stores the transaction ledger in the financial trader terminal of the financial trader a, the financial trader terminal of the financial transaction o, the unrelated person terminals (a majority including x, y, z) of the financial trader a, and the unrelated person terminals (a majority including p, q, r) of the financial trader o.

An error may occur in the artificial intelligence computer 7000 and the financial transaction management computer 5000 among the components of the financial transaction system of the present invention.

In this case, as a control means of the artificial intelligence computer 7000 and the financial transaction management computer 5000, in particular, in order to prevent operation errors, bugs or strong artificial intelligence functions of the artificial intelligence computer 5000, the applicant's registered patent by using the collective intelligence convergence system (Patent No. 10-1804960), it is possible to determine whether to correct an error or whether to change the standard by submitting it to the collective intelligence convergence system.

Hereinafter, an embodiment of a financial transaction with an existing bank, such as the financial institution computer 8000 or an automatic transaction machine ATM, will be described using an embodiment of the financial transaction system of the present invention. In this case, it is assumed that the financial transaction system of the present invention is affiliated with an existing financial institution such as a bank.

In the state that the unique identification information (account information) of the financial trader a opened in the financial transaction management computer 5000 is opened in the bank, an example in which a financial trader a of the financial transaction system of the present invention deposits 300,000 won into the account information of the financial trader a through an automatic transaction machine ATM of a bank will be described. When the financial trader a deposits 300,000 won to the identification information (account number) of the bank opened at the ATM, It can be configured such that 300,000 won is charged to the unique identification information (account information) of financial trader a of the financial transaction system (concept of charging points with cash).

In addition, In the state that the unique identification information (account information) of the financial trader a and financial trader b opened in the financial transaction management computer 5000 is opened in the bank, an example in which a financial trader a of the financial transaction system of the present invention deposits 700,000 won into the account information of the financial trader b through an automatic transaction machine ATM of a bank will be described. When the financial trader a transfers 700,000 won to the identification information (account number) of the bank of the financial trader b from the identification information (account number) of the bank of the financial trader a at the ATM, It can be configured such that 700,000 won is charged to the unique identification information (account information) of the financial transaction system of financial trader b.

In addition, this is an explanation of a case where financial trader a transfers 500,000 won from an account of a specific bank to unique identification information (account information) of financial trader b in the financial transaction system of the present invention. When the specific bank is a member of the financial transaction system of the present invention, 500,000 won transfers to the unique identification information (account information) of the financial transaction system of the financial trader b from the bank account of the financial trader a according to the above procedure, and , when the specific bank is a non-member of the financial transaction system of the present invention, funds may be transferred by utilizing the interbank transfer system through business alliances with the specific bank.

In addition, in the case of withdrawing 500,000 won in cash from the unique identification information (account information) of financial trader a in the financial transaction system of the present invention, financial trader a can withdraw using the automatic transaction machine ATM of the bank through business partnerships with banks.

In this case, financial trader a actually holds 500,000 won or more in the unique identification information (account information) of financial trader a in the financial transaction system of the present invention, or may transfer the amount of money withdrawn in the financial transaction system of the present invention to the bank.

Hereinafter, principles of forgery prevention, personal information protection, and rapid processing of financial transactions of the financial transaction system of the present invention will be described.

The financial transaction system of the present invention shares the transaction ledger, but not all members (unrelated persons) share the transaction ledger, but distributes and stores and shares only the set number of unrelated persons participating in financial transaction approval. By doing this, it is possible to perform the anti-counterfeiting and falsification function while solving the problems of the block chain, which shows an increase in processing cost and a decrease in efficiency and scalability due to the sharing of the transaction ledger to all members (unrelated persons).

In addition, the financial transaction system of the present invention provides unique identification information (account information) of the financial trader to protect the personal information of the financial trader.

In addition, in the financial transaction system of the present invention, it is possible to generate and store a transaction ledger by encrypting all sensitive personal information such as account balances and transaction details related to financial transactions.

For example, when the details of the previous transaction or the balance of the previous transaction are changed by using the block chain technology, a function of sending an abnormal signal in the financial transaction system of the present invention can be added as the value of a specific numerical value is changed, and can be further strengthened the security by using a 'hash cipher' (encryption hash function) as encryption that cannot be decrypted (recovery of the original contents).

Here, the cryptographic hash function is a kind of hash functions, and refers to a case in which it is difficult to find a relationship with an original input value from a hash value.

In addition, the financial transaction system of the present invention is configured so that the selection of unrelated persons is automatically determined at random by an artificial intelligence computer for each transaction, so that manipulation of the transaction ledger by the inclusion of unrelated persons is impossible.

In addition, within the financial transaction system of the present invention, the transaction is approved by financial transaction details, and the person who shares the transaction ledger is recorded as an identification number and managed internally, and it can be configured so that no one can access it by processing encryption (a hash password can be applied if necessary).

In addition, the financial transaction detail calculation data and transaction ledger data are encrypted and stored in a plurality of places including a financial transaction management system, a cloud computing system, and a virtual web space. In principle, this system uses distributed storage to block data manipulation and forgery attempts by malicious forces.

In addition, the financial transaction system of the present invention can be configured to solve the problems of forgery prevention, hacking blocking, and single point of failure by using distributed computing technologies such as distributed cloud, hybrid cloud, and multi-cloud.

In addition, the financial transaction system of the present invention can provide a physical space for data storage such as a transaction ledger by using a terminal such as a computer for financial traders and unrelated persons in the financial transaction system of the present invention. In this case, a predetermined reward may be paid according to the provision of the physical space.
the financial transaction system of the present invention is configured to improve the efficiency by distributed computing, block the possibility of forgery and falsification of data, and increase the possibility of data recovery when a problem occurs..

The financial transaction system of the present invention is configured to improve efficiency by distributed computing, block the possibility of forgery and falsification of data, and increase the possibility of data recovery when a problem occurs.

In addition, arithmetic operations such as calculation of financial transaction details after data encryption can be performed using 'homomorphic encryption technology'. Homomorphic encryption has the advantage of reducing the risk of data leakage because it enables search, statistical processing, and machine learning without decrypting the ciphertext, and does not require decryption in the middle of data processing.

The financial transaction management computer and the financial transaction information storage computer of the financial transaction system of the present invention can be installed and operated in a plurality of different spaces in order to prevent the problem of a single point of failure.

Hereinafter, an embodiment of the identity authentication system for approving of the user authentication of the financial trader, which is a major part of the financial transaction system of the present invention, will be described in detail.

FIG. 6 is a schematic configuration diagram of an embodiment of an identity authentication system which is a main part of the financial transaction system of the present invention.

As illustrated in FIG. 6, an identity authentication system of the present invention comprising: an operating computer 100 that receives and manages information on related person group and information of the related persons of an authentication requester, and manages the generated user authentication information and identity verification information; an artificial intelligence computer 200 that forms a big data database by analyzing information such as words used in daily conversations and conversations between acquaintances through the Internet social network, etc., receives information of the communication details of the related person group related to request for user authentication from the operating computer 100, performs identity verification, and transmits the identity verification information to the operating computer; a data storage computer 300 that stores data including authentication requester information of user authentication, information of the related person group and the communication details of the related person group managed by the operating computer and the identity verification information transmitted from the artificial intelligence computer 200; an analysis data storage computer 400 that stores a big data database which the artificial intelligence computer 100 generates by collecting and analyzing, analyzed information of the communication details of the related person group received from the operating computer 100, and various analysis data of the artificial intelligence computer 200 and statistics based thereon; a user authentication approval requesting means provided in the authentication requester terminal 500 of the authentication requester that is communicatively connected with the operating computer 100 to request user authentication and receive an approval information of the user authentication; and an identity verification data providing means provided in at least one related person terminal of the related persons related to the user authentication requester that is communicatively connected with the operating computer that provides relationship information and communication details with the user authentication requester to the operating computer.

The operating computer 100 may include at least one server computer having a communication means and capable of executing a computer program or a web program. The artificial intelligence computer 200 may include at least one server computer having a communication means and capable of executing an artificial intelligence (AI) related computer program or web program. The data storage computer 300 and the analysis data storage computer 400 may be configured as a database management system (DBMS). The authentication requester terminal 500 and the related person terminal are provided with communication means, and may be composed of terminals such as a smartphone, a tablet computer, a personal computer (PC), and a notebook computer in which an application program or a web program can be executed. The application program or web program provided by the authentication requester terminal 500 may be configured as a user authentication approval request means for requesting the user authentication approval to the operating computer 100. The application program or web program included in the related person terminal may be configured as an identity verification data providing means for providing relationship information and communication details with the requester of the user authentication. The Internet social network 700 is configured to include various social network services (SNS) and Internet media. In the above configuration of the present invention, when the authentication requestor terminal 500 requests user authentication, the operating computer 100 receives information of related persons such as acquaintances of the authentication requester and communication information of related persons from the authentication requester, requests relationship information and communication details with the requester of the user authentication for verifying whether the authentication requester is the same person to the related persons, and receives the information. The operating computer transmits the received communication details information of related persons to the artificial intelligence computer 200 to request identity verification. The artificial intelligence computer 200 analyzes the received relationship information and communication details information of the related persons, verifies the identity based on the consistency of the analyzed data and big data database that is self-generated and stored by collecting from the Internet social network 700, transmits the identity verification information to the operating computer 100, and the operating computer 100 transmits an approval information of the user authentication to the authentication requester terminals 500 based on the received identity verification information.

When the communication details information is voice information, the information may be analyzed using a voice recognition technology or by using a voice matching method, voice text conversion technique, or the like. The relationship information between the related persons and the authentication requester may include, for example, family members, relatives, friends, work colleagues, school classmates, social members, and acquaintances for hobbies. In addition, the communication details information of the related persons or related person group is, for example, a mobile phone text message (SMS, MMS, etc.), a chat message in a chatting application program running on a mobile phone, and a text message on a social network service (SNS). It includes various types of communication information performed using a mobile phone, including communications, e-mail letters, and Internet voice calls on mobile phones.

In the embodiment of the identity authentication system of the present invention, the function of the artificial intelligence computer 200 is performed by the operating computer 100 and the artificial intelligence computer 200 may be omitted.

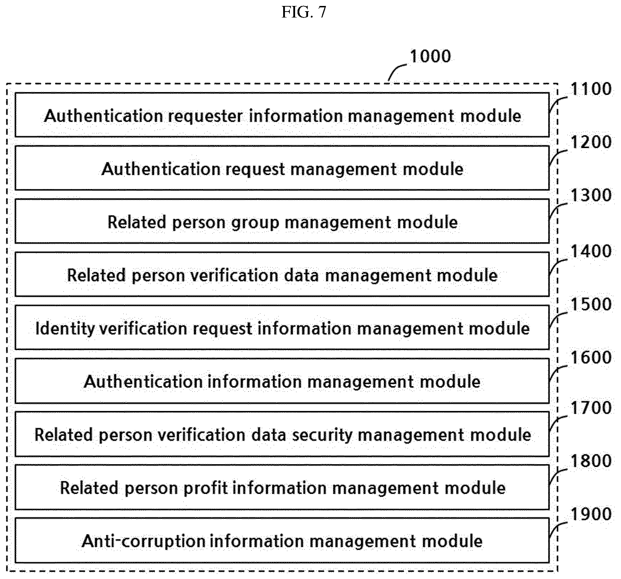

FIG. 7 is a schematic configuration diagram of an embodiment of an operating computer which is a main part of the identity authentication system of the present invention.

As illustrated in FIG. 7, the operating computer 100 of the present invention or an identity authentication management means 1000 composed of a computer program executed on the operating computer 100, etc., comprising: an authentication requester information management module 1100 that receives a personal information and at least one password information of the authentication requester entered into the authentication requester terminal 500 by the authentication requester who wants to perform user authentication, and stores and manages the information in the data storage computer 300; an authentication request information management module 1200 that receives and manages an authentication request data of the user authentication including personal information name and facial photo, or name and mobile phone number of the authentication requester, information on consent to use of information of related persons such as acquaintances of the authentication requester, and information on prior consent in providing information of related persons stored in the terminal being used, such as a mobile phone or personal computer (PC) of the authentication requester input into the authentication requester terminal 500; a related person group management module 1300 that receives and manages information of related persons including mobile phone numbers, e-mail addresses, SNS addresses, etc. of related persons transmitted from the authentication requestor terminal 500; a related person verification data management module 1400 that receives a verification data that it is determined that the related persons are the same person from the related person group terminal 600, in response to the request message for verifying whether the authentication requester is the same person transmitted by the operating computer 100; an identity verification request information management module 1500 that transmits the related person verification data received from the related person terminals 600 to the artificial intelligence computer 200, and requests and manages identity verification of the authentication requester; an authentication information management module 1600 that receives and manages identity verification information of the authentication requester transmitted from the artificial intelligence computer 200; a related person verification data security management module 1700 that encrypts and decrypts related person information data and personal information received from the related person group terminal 600; a related person benefit information management module 1800 that stores and manages benefit information including points given to related persons who have agreed to a request for verification of whether the authentication requester is the same while providing information on the related person, etc.; and an anti-corruption information management module 1900 that filters the authentication requester or related persons providing false information for fraudulent purposes, grants penalty points to the wrongdoer, and manages it.

The related person group management module 1400 may generates and manages a related group by grouping the related persons of the authentication requester into categories such as, for example, family, relatives, friends, work, school, friendship, and hobbies.

The security of information data and personal information of related persons in the related person verification data security management module 1700 is encrypted and stored to protect data including the communication details and their contents. When it is necessary to analyze the data, the data is decrypted. After the analysis of the data is completed, the data is encrypted again and stored.

In addition, analysis processing is possible without decryption of communication details and contents encrypted by homomorphic encryption technology or the like.

In addition, the fraud prevention information management module 1900 can prevent various fraudulent acts. For example, it is possible to prevent a person other than the person from performing user authentication for illegal purposes.

In order to prevent fraud, the anti-corruption information management module 1900 confirms the name through a bank account opened in the name of the authentication requester, or checks the validity of the name of the authentication requester's mobile phone in use through password confirmation method can be used.

The motive of illegal use of the identity authentication system of the present invention can be blocked by taking measures such as giving a strong penalty to an illegal user or deducting a reliability score index.

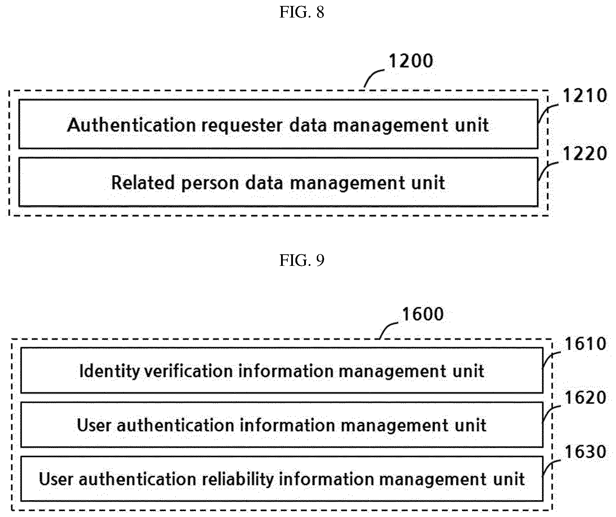

FIG. 8 is a schematic configuration diagram of an authentication request management module which is a main part of the operating computer of the present invention.

As illustrated in FIG. 9, the authentication request management module 1200 comprising: an authentication requester data management unit 1210 that receives and manages name and facial photo, or name and mobile phone number transmitted from the authentication requester terminal 500 of authentication requester and data related to information of related persons such as acquaintances who know the authentication requester stored in an electronic device capable of communicating with an external communication medium including mobile phone, tablet computer, laptop computer, and personal computer being used by the authentication requester; and a related person data management unit 1220 that stores and manages related person information among the related person information and data such as the related person's mobile phone number, e-mail address, and various social network service access addresses.

When the facial photo or mobile phone number input from the authentication requester terminal 500 managed by the authentication requester data management unit 1210 is different from that previously managed, the operating computer 100 stores the change history and can manage.

FIG. 9 is a schematic configuration diagram of an embodiment of an authentication information management module which is a main part of the operating computer of the present invention.

As illustrated in FIG. 9, the authentication information management module 1600 comprising: an identity verification information management unit 1610 that receives, stores, and manages identity verification information derived by analyzing the information provided by the related persons that the authentication requester transmitted from the artificial intelligence computer 200 is the same person; a user authentication approval information management unit 1620 that generates an approval information of user authentication based on the identity verification information, and transmits and manages an approval information of the user authentication to the authentication requester terminal of the authentication requester; and a user authentication reliability information management unit 1630 that stores and manages reliability granting and reliability upgrade information to a person who has received approval for user authentication.

The reliability of the person who has received authentication approval managed by the user authentication reliability information management unit 1630 can be given a reliability index score of, for example, 80 points when the first user authentication is approved. When the data is further analyzed and authenticated by the artificial intelligence computer, a reliability index score may be additionally given according to predetermined criterion.

The predetermined criterion for adding the index score of reliability can be determined in proportion to, for example, the number of related persons who participated in the identity verification, the total number of related persons groups, the total period during which messages are transmitted and received. In addition, it can be determined based on a numerical value that is proportional or inversely proportional to the user average of each item.

The at least one password of the user who wants to receive the identity authentication received by the authentication requester information management unit 1100 is a means for preventing illegal use and involuntary use such as misuse, theft, etc. of the user authentication request.

For example, two passwords can be set for daily use and for emergency use.

The daily use password is used to normally receive user authentication, and the emergency password can be set to be obtained involuntarily by coercion in abnormal situations such as kidnapping. The daily use password and the emergency password are set differently, and the daily use password and the emergency password are processed in the same way through the above-described procedure when an authentication request is made. However, the user can selectively set the emergency password.

In addition, the user can set or select the action to be taken on the operating computer when the user authentication request is made by entering the emergency password. For example, the operating computer may be set to transmit a message notifying that the user is in an emergency situation to an immediate family member, lover, or friend along with location information. In addition, it can be set to request help by sending a message directly to an investigation agency such as a police station.

In addition, in relation to changing the password, the change of the daily password can be performed in a conventional way by accessing the operating computer, and the change of the emergency password can be set to be possible only face-to-face at specific places such as financial institutions and community centers affiliated with the identity authentication system of the present invention.

In addition, an input field may be configured to input the password together with a name and a face photograph, or a name and a mobile phone number, on the application screen of the authentication requester terminal 500 when the authentication requester terminal 500 requests user authentication.

In this case, the input order of the items to be input in the input field may be arbitrarily inputted. However, if the input order for each item is consistently set, a procedure for checking whether illegal use is performed may be performed according to a change in the input order.

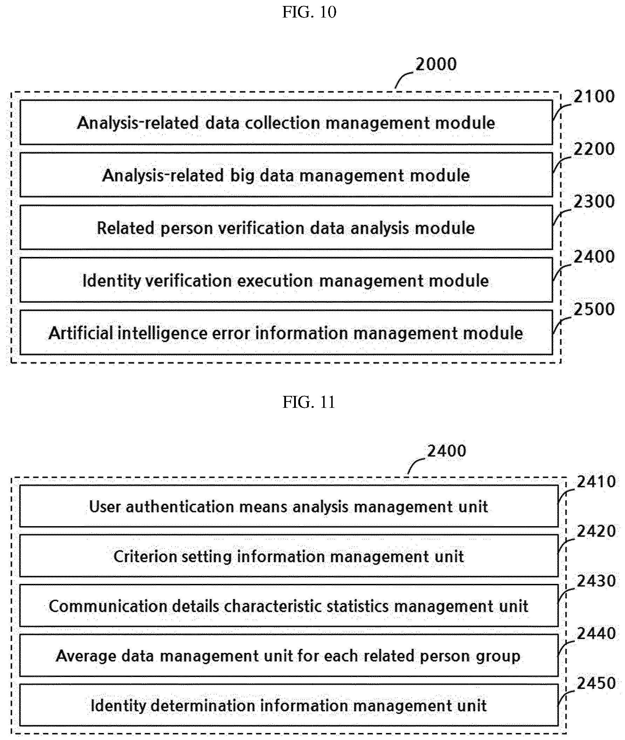

FIG. 10 is a schematic configuration diagram of an embodiment of an artificial intelligence computer which is a main part of the identity authentication system of the present invention.

As illustrated in FIG. 10, the artificial intelligence computer 200 of the present invention or an artificial intelligence identity verification management means 2000 consisting of a computer program executed on the artificial intelligence computer 200, etc. comprising: an analysis-related data collection management module 2100 that collects and manages data such as words, vocabulary, sentences, expressions, etc. used in the relationship in the relationship group of the authentication requester; an analysis-related big data management module 2200 that manages the data collected by the analysis-related data collection management module 2100 as big data and manages the update of big data; a related person verification data analysis management module 2300 that analyzes and manages data for each relationship in a relationship group based on information such as related persons of the authentication requester transmitted from the operating computer; an identity verification execution management module 2400 that determines whether the authentication requester is identical based on the analyzed related data and the consistency of the big data; and an artificial intelligence error information management module 2500 manages a method for determining an error when an error occurs in the operation of the artificial intelligence computer 200, a method for manually setting the operation of the artificial intelligence computer 200, and a method for solving the problem due to the rapid development of artificial intelligence (AI).

Determination of artificial intelligence operation errors in the artificial intelligence error information management module 2500, manual setting of operation, and problem solving due to strong artificial intelligence can control the artificial intelligence by using the collective intelligence convergence system (Applicant's Patent No. 10-1804960).

FIG. 11 is a schematic configuration diagram of an embodiment of an identity verification execution management module which is a main part of the artificial intelligence computer of the present invention.

As illustrated in FIG. 11, the identity verification execution management module 2400 comprising: a user authentication means analysis management unit 2410 that analyzes and manages communication details between a person who has been authenticated by various existing means such as a user authentication-related authorized certificate and a mobile phone check and the related persons; a criterion setting information management unit 2420 that sets and manages a criterion of how many or more persons should be confirmed by each related person group; a communication details characteristic statistics management unit 2430 analyzes and deals with statistics an analyzed contents of communication details in the user authentication means analysis management unit 2410 and the characteristics of transmission and reception of communication details between a person who has been authenticated and a related person according to the criterion set in the criterion setting information management unit 2420; and the criterion setting information management unit 2420 analyze the characteristics of transmission and reception of communication details between a person who has been authenticated and a related person according to the criteria set in the criterion setting information management unit 2420 to generate and manage statistics Communication history characteristic statistics management unit 2430; an average data management unit 2440 for each related person group that calculates and manages average data of transmission and reception items for each related person group of the authenticated person or all members; and an identity determination information management unit 2450 that compares and analyzes the similarities and differences with the average data for the authentication requests of the authentication requester to determine whether they are identical and manages the results.

In the criterion setting information management unit 2420, for example, the related person group may be divided into family, friends, and work. Here, the criterion may be set as the number of family members as at least 3, the number of friends as at least 7, and the number of office workers as at least 10.

In addition, the characteristics of transmission and reception in the communication details characteristic statistics management unit 2430 are, for example, the number of related persons per group of related persons, total transmission and reception period, transmission/reception period, number of transmission/reception, reaction time between transmission and reception, title, subject, Examples include words, vocabulary, sentences, honorifics, abbreviations, whether emoticons are used, grammar, punctuation marks, whether abbreviations or short sentences are used, singularities in content, and the like.

In addition, the communication details characteristic statistics management unit 2430 calculates major mathematical values such as the average, standard deviation, maximum value, and minimum value of each item related to the transmission and reception characteristics, or stores frequently used expressions in the analysis data storage computer 400 .

The average data management unit 2440 for each related person group may write, for example, as shown in Table 2 below in order to calculate average data of transmission/reception items for each related person group.

**[Table 2]**

| | **family** | **friends** | **workplace** |
|---|---|---|---|
| Number of related person | 3persons | 7persons | 10persons |
| Total period of Transmission/Reception | 350days | 70days | 280days |
| Cycle of Transmission/Reception | 5days | 12days | 2days |
| Number of Transmission/Reception | 2times/week | 1 times/week | 3times/week |
| Total time of Transmission/Reception | 15minutes | 90minutes | 3minutes |
| Topic | Meal | Promise | Work |
| Word | Rice | Location | Report |
| Sentence | Eat | Meet | Dining together |

In the determination of identity in the identity determination information management unit 2450, for example, when the numerical value of a specific item, such as the number of related persons, is less than the average, the criterion of other items may be strengthened than the average.

For example, the transmission/reception period may be longer, the transmission/reception period may be further reduced, the number of transmission/reception is required more, the response time between transmission/reception may be further shortened, or the degree of matching of subjects, words, and sentences may be increased.

On the other hand, when the numerical value of a specific item, such as the number of related persons, is greater than the average, the criteria for other items may be relaxed compared to the average to determine equality.

The analysis-related big data management module 2200 of the artificial intelligence computer 200 receives pre-entered data such as representative words, vocabulary, sentences, and expressions used in the relation by the system operator for each relation group of the authentication requester and data provided by those who have agreed to use the identity authentication system of the present invention, updates and accumulates data such as representative words, vocabulary, sentences, and expressions used in the relationship. In addition, the artificial intelligence computer can access various social network services (SNS) and internet media to collect expressions used in specific relationships, and store and manage these data in the analysis data storage unit 400 as big data.

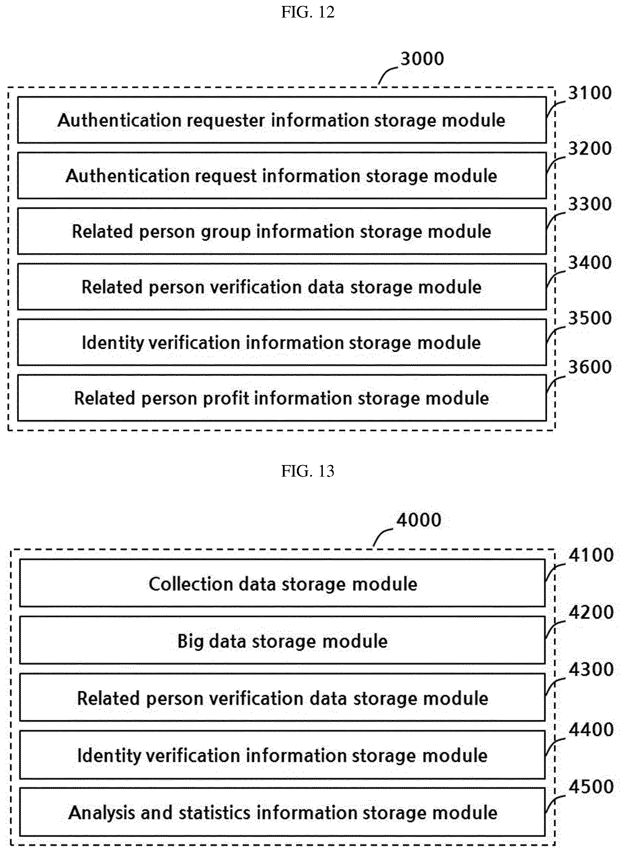

FIG. 12 is a schematic configuration diagram of an embodiment of a data storage computer which is a main part of the artificial intelligence computer of the present invention.

As illustrated in FIG. 12, the data storage computer 300 or a data storage means 3000 included in the data storage computer 300, comprising: an authentication requester information storage module 3100 that stores personal information and at least one password of a person who wants to receive user authentication received from the operating computer 100; an authentication request information storage module 3200 that stores the name and facial photo of the authentication requester, or name and mobile phone number, information of related persons, etc. received by the operating computer 100; a related person group information storage module 3300 that groups related persons provided by the authentication requester and stores related person group data; a related person verification data storage module 3400 that stores communication details data for each relationship group of the related person group received by the operating computer 100; an identity verification information storage module 3500 that stores the determined identity verification information by determining the consistency between the analysis result of the communication details data for each relationship group and the big data; and a related person benefit information storage module 3600 that stores benefit information granted to those who have provided communication details with the authentication requester to the operating computer 100.

FIG. 13 is a schematic configuration diagram of an embodiment of an analysis data storage computer which is a main part of the artificial intelligence computer of the present invention.

As illustrated in FIG. 13, the analysis data storage computer 400 or an analysis data storage means 4000 included in the analysis data storage computer 400, comprising: a collection data storage module 4100 that stores data related to identity verification of the authentication requester collected by the artificial intelligence computer 200 through various routes; a big data storage module 4200 that stores the collected the data related to identity verification as big data and managing updates; a related person verification data storage module 4300 that stores the analyzed related person verification data; an identity verification information storage module unit 4400 that stores the identity verification information regarding whether the authentication requester determined by analysis by the artificial intelligence computer 200 is the same person; and an analysis and statistics information storage module 4500 that analyzes in which the artificial intelligence computer stores statistical information derived by analyzing the analysis information of information of related persons of persons for whom user authentication is approved and the characteristics of transmission and reception of communication details between persons for whom user authentication is approved and related persons.

The data storage means 3000 and the analysis data storage means 4000 are not limited to the above embodiment. In addition, it may be configured to store the execution results of the operating computer 100 and the artificial intelligence computer 200.

In the embodiment of the present invention, when the authentication requester is a corporation (company) rather than an individual, it can be considered that the corporation does not have a risk of personal information leakage and that the method of verifying the identity of the corporation is well prepared in the existing system. For example, it can be applied by setting a different criterion, such as using the address of a corporation instead of the photo of the authentication requester, or by relaxing the method of verifying identity compared to the case of an individual.

For example, if the authentication requester is a corporation (company), the related person group can be set with at least one employee, customer, and customer.

In addition, as an auxiliary means for preventing illegal use, verification through the bank of a corporation (company), verification through corporate registration number inquiry, or verification method through business registration number can be used.

The identity authentication method of the financial transaction system comprising: receiving, by an operating computer, information of the authentication requester and at least one password from the authentication requester terminal of the authentication requester who wants to receive user authentication and storing as a member; receiving, by the operating computer, an approval request data of the user authentication including the name and facial photo of the authentication requester, or name and mobile phone number, and password, which the operating computer has transmitted from the authentication requester terminal, the information of the related persons stored in the communication capable the authentication requester terminal, and the intention of agreement to use the information of the related persons; transmitting, by the operating computer, a request message for identity verification of the authentication requester including authentication requester information including the name and photo of the authentication requester, or the name and mobile phone number of the authentication requester to the related person group terminal of the related persons of the authentication requester; receiving. by the operating computer, information on the related persons including a relationship information with the authentication requester transmitted from the related person group terminal, communication details with the authentication requester, and an identity verification data necessary for determining whether the authentication requester is identical; transmitting, by the operating computer, information of related persons including communication details with the authentication requester transmitted from the related person group terminal to the artificial intelligence computer to request identity verification determination; comparing, by the artificial intelligence computer, relationship data obtained by analyzing information of related persons including communication details between the authentication requester and related persons transmitted from the operating computer and big data related to relationship data managed in its own database by analyzing information such as words and expressions used in daily conversations and conversations between acquaintances, and if the comparison result shows that the consistency exceeds a certain ratio, generating identity verification information and transmitting it to the operating computer; and receiving, by the operating computer, the identity verification information of the related persons of the authentication requester transmitted from the artificial intelligence computer, generating an approval information of the user authentication based on the received identity verification information, and transmitting the approval information of the user authentication to the authentication requester terminal.

The identity authentication method of the financial transaction system comprising: receiving, by an operating computer, information of the authentication requester and at least one password from the authentication requester terminal of the authentication requester who wants to receive user authentication and storing as a member; receiving, by the operating computer, an approval request data of the user authentication including the name and facial photo of the authentication requester, or name and mobile phone number, and password, which the operating computer has transmitted from the authentication requester terminal, the information of the related persons stored in the communication capable the authentication requester terminal, and the intention of agreement to use the information of the related persons; transmitting, by the operating computer, a request message for identity verification of the authentication requester including authentication requester information including the name and photo of the authentication requester, or the name and mobile phone number of the authentication requester to the related person group terminal of the related persons of the authentication requester; receiving. by the operating computer, information on the related persons including a relationship information with the authentication requester transmitted from the related person group terminal, communication details with the authentication requester, and an identity verification data necessary for determining whether the authentication requester is identical; transmitting, by the operating computer, information of related persons including communication details with the authentication requester transmitted from the related person group terminal to the artificial intelligence computer to request identity verification determination; comparing, by the artificial intelligence computer, relationship data obtained by analyzing information of related persons including communication details between the authentication requester and related persons transmitted from the operating computer and big data related to relationship data managed in its own database by analyzing information such as words and expressions used in daily conversations and conversations between acquaintances, and if the comparison result shows that the consistency exceeds a certain ratio, generating identity confirmation information and transmitting it to the operating computer; receiving, by the operating computer, the identity verification information of the related persons of the authentication requester transmitted from the artificial intelligence computer; receiving, the operating computer, the approval request data of the user authentication including name and facial photo, or name and mobile phone number, and mobile phone number and password of the authentication requester transmitted from the authentication requester terminal of the authentication requester; determining, by the operating computer, whether the approval request data of the user authentication transmitted from the authentication requester terminal matches the stored name and facial photo, or name and mobile phone number and password of the authentication requester; and when they match, generating, by the operating computer, an approval information of the user authentication based on the stored identity verification information of the authentication requester, and transmitting the approval information of the user authentication to the authentication requester terminal.

In addition, the identity verification method of the artificial intelligence computer in the identity authentication system of the financial transaction system of the present invention, comprising: analyzing, by the artificial intelligence computer, communication details between person who has received the user authentication by the existing various means, such as a user authentication-related accredited certificate and mobile phone confirmation, and the related person; establishing, by the artificial intelligence computer, criteria for how many or more related persons should be confirmed for each related person group of the authentication requester; calculating, by the artificial intelligence computer, statistics based on the analysis of the communication details between the person who has been authenticated and the related person and the analysis of the characteristics of transmission and reception of the communication details between the person who has been authenticated according to the set criteria and the related person; calculating, by the artificial intelligence computer, average data of persons who have been authenticated or all members of each related person group using statistics calculated through analysis of characteristic points on transmission and reception; and determining, by the artificial intelligence computer, whether the authentication is identical by comparing and analyzing the similarity and difference with the average data for the authentication request of the authentication requester, and deriving the identity verification information.

In the identity verification system of the financial transaction system of the present invention, when the object of identity verification is a thing other than a person (or corporation), the identity of the object can be verified using various information (communication details) transmitted and received between things connected through a communication means such as the Internet.

The terms and expressions used in the above embodiments of the present invention are not limited thereto. It is natural that various words and expressions that can be predicted by those of ordinary skill in the art may be replaced.

In addition, the embodiments of the present invention described above are only some of the various embodiments of the present invention.

The identity authentication system receives personal information and related person information provided by the financial trader, and the artificial intelligence computer analyzes the communication details between the financial traders and the related persons to determine the consistency with the related big data collected by the artificial intelligence computer. After verifying that the financial trader is the same person, the user authentication of the financial trader is approved.

When a financial trader performs a financial transaction through the financial transaction management computer, the artificial intelligence computer provides information of a plurality of unrelated persons who are not related to the financial trader.

The financial transaction management computer requests approval of the financial transaction details of the financial transaction from unrelated persons, receives information on approval of the financial transaction details of the financial trader from a plurality of unrelated persons, completes the financial transaction of the financial trader, generates the transaction ledger based on the completed financial transaction information, and distributes and stores the transaction ledger in the terminals of the parties to the financial transaction and the terminals of unrelated persons participating in the approval of the financial transaction.

In addition, cloud computing system provides a related program to the terminal of the financial transaction party to perform financial transactions, and the transaction ledger of financial transaction information is distributed and stored in a virtual space provided by the cloud computing system.

It is natural that various embodiments included in the technical spirit of the present invention fall within the protection scope of the present invention.

### [Industrial Applicability]

The present invention can be applied to industries related to financial transactions.

## Claims

1. A system for financial transaction comprising: a financial transaction management computer including computer hardware that causes the system performs: extracting information of unrelated persons not related to a financial trader according to a financial transaction request of the financial trader; requesting a financial transaction approval of the financial trader by providing financial transaction details of the financial trader to the unrelated persons; and receiving an approval information of the financial transaction of the financial trader from the unrelated persons, and completing the financial transaction of the financial trader.

2. The system for financial transaction of claim 1, wherein the information of the unrelated persons is information selected by the financial transaction management computer excluding the related persons based on the information of the related persons provided from the financial trader.

3. The system for financial transaction of claim 1, wherein the financial transaction management computer receives the financial transaction request of the financial trader, and extracts information related to a specific relationship with the financial trader from communication details of the financial trader included in the financial transaction request.

4. The system for financial transaction of claim 3, wherein the financial transaction management computer performs user authentication of the financial trader based on the consistency between relationship data related to the specific relationship between the extracted related persons and the persons analyzed in the communication details with the financial trader, and the relationship data related to the specific relationship between the person held by itself.

5. A system for financial transaction comprising: a financial transaction management computer that executes and manages the financial transaction of a financial trader, and a identity authentication system that executes identity authentication of the financial trader based on identity verification information of the financial trader provided from the related persons of the financial trader,
the financial transaction management computer including computer hardware that causes the system performs: extracting information of unrelated persons not related to the financial trader according to a financial transaction request of the financial trader who is completed the identity authentication in the identity authentication system; requesting a financial transaction approval of the financial trader by providing financial transaction details of the financial trader to the unrelated persons; and receiving an approval information of the financial transaction of the financial trader from the unrelated persons, and completing the financial transaction of the financial trader.

6. The system for financial transaction of claim 5, wherein the information of the unrelated persons is information selected by the financial transaction management computer excluding the related persons based on the information of the related persons provided from the financial trader.

7. The system for financial transaction of claim 5, wherein the identity authentication system extracts information of related person that is a specific relationship with the financial trader from communication details of the financial trader included in the financial transaction request of the financial trader.

8. The system for financial transaction of claim 7, wherein the identity authentication system performs user authentication of the financial trader based on the consistency between relationship data related to the specific relationship between the extracted related persons and the persons analyzed in the communication details with the financial trader, and the relationship data related to the specific relationship between the person held by itself.

9. A financial transaction method comprising: extracting, by a financial transaction management computer, information of unrelated persons not related to a financial trader according to a financial transaction request of the financial trader;
requesting, by the financial transaction management computer, approval of financial transaction of the financial trader by providing financial transaction details of the financial trader to the extracted unrelated persons; and receiving, by the financial transaction management computer, an approval information of the financial transaction of the financial trader from the unrelated persons, and completing the financial transaction of the financial trader.

10. A financial transaction method comprising: performing, by an identity authentication system, user authentication through identity authentication of a financial trader using information of related persons of the financial trader in response to a user authentication request of the financial trader; extracting, by a financial transaction management computer, information of unrelated persons not related to the financial trader according to a financial transaction request of the financial trader whose user authentication has been completed in the identity authentication system; requesting, by the financial transaction management computer, approval of the financial transaction of the financial trader by providing financial transaction details of the financial trader the extracted unrelated persons; and receiving, by the financial transaction management computer, an approval information of the financial transaction of the financial trader from the unrelated persons, and completing the financial transaction of the financial trader.
